# EUROPEAN PATENT APPLICATION

(11) **EP 2 031 364 A2**
(43) Date of publication of application: **04.03.2009**
(21) Application number: 08163013.9
(22) Date of filing: 26.08.2008
(51) Int. Cl.: G01N 1/10, E02D 1/00

(54) **Method and system for groundwater contaminant monitoring**

(30) Priority: 30.08.2007 US 847932
(71) Applicant: Honeywell International Inc., Morristown, NJ 07962 (US)
(72) Inventor: Cole, Barrett E., Bloomington, MN 55431 (US); Gu, Yuandong, Plymouth, MN 55447 (US)
(74) Representative: Buckley, Guy Julian

(57) **Abstract**

A method and system for groundwater contaminant monitoring is described. Groundwater is pumped to a stage above the groundwater table where at least a portion of the groundwater is vaporized. The vapor is sampled using cavity ring down spectrometer and the measured vapor concentration of a contaminant is converted to a liquid contaminant concentration.

## Description

### FIELD

The present invention relates generally to a groundwater contaminant monitoring, and more particularly, relates to using a sensor that can monitor low levels of groundwater contamination on-site.

### BACKGROUND

Groundwater contamination occurs when man-made products, such as gasoline, oil, road salts, and chemicals, get into the groundwater. Some of the major sources of these products, called contaminants, are storage tanks, septic systems, hazardous waste sites, landfills, and the widespread use of road salts and chemicals. When contaminants impact the health and safety of humans using or potentially using the groundwater, various governmental regulations require the property owners and/or the party causing the contamination to remediate the groundwater to levels considered safe for human use.

The Environmental Protection Agency (EPA) determines maximum contaminant levels (MCLs) for chemicals found in groundwater. State agencies can adopt the EPA's MCLs or can require more stringent cleanup standards (but not less stringent cleanup standards). For many chemicals, the MCL is in the parts-per-million (ppm) or parts-per-billion (ppb) range. For example, benzene, which is a known carcinogen found in gasoline, has an EPA MCL of 5ppb. Thus, any groundwater monitoring system should be able to detect contaminants at minute levels.

Typically, the groundwater is monitored on a periodic basis before designing a remediation plan, during the remediation of the site, and after remediation is complete to verify that the groundwater meets agency cleanup levels. For example, groundwater may be monitored on a quarterly basis for many years to monitor seasonal effects, evaluate the size of the contaminate plume, and determine the effects of any remediation plans implemented.

Groundwater monitoring involves installing groundwater monitoring wells at various locations in and around the site to determine the plume characteristics. For example, one or more wells may be installed at the location expected to have the highest concentration of contaminants, such as the location of a chemical spill. Additionally, several wells may be placed at what is expected to be the edge of the contamination plume. The location of the edge of the plume may depend on the type of contaminant, the soil characteristics, the depth to groundwater from the ground surface, and the direction of groundwater flow, which is influenced by surface contours and man made structures, such as utility corridors. Additional wells may also be placed between the wells at the center of the plume and those at the edge of the plume to evaluate the characteristics of the plume, such as whether the plume is expanding or receding.

To obtain a sample from a groundwater monitoring well, the well may be initially purged to remove stagnant water within the well casing and surrounding filter pack, helping to ensure that the water sample collected represents the actual ground water in the vicinity of the well. For example, a common standard is to purge three to five well volumes or until the well is dry once before sampling. No-purge methods may also be used.

The collected groundwater samples are typically sent to a laboratory for analysis. The laboratory runs tests based on the type of contaminant to be analyzed. For example, volatile organic compounds (VOCs) are typically measured using gas chromatography and mass spectrometry protocols. This testing can be quite costly, especially when there are numerous monitoring wells on a site and the remediation plan calls for quarterly monitoring. Moreover, gas chromatography and mass spectrometry instruments are typically large and complex and, therefore, not amenable to on-site testing.

Accordingly, it would be beneficial to provide a method and system of monitoring low levels of groundwater contamination on-site.

### SUMMARY

A method and system for in-situ groundwater monitoring is described. The method includes moving groundwater to a container located above a groundwater table; vaporizing at least a portion of the groundwater in the container; and measuring a concentration of at least one chemical in the vapor.

Moving groundwater may include pumping the groundwater to the container and/or using vertical transport of the groundwater to the container. Vaporizing at least a portion of the groundwater may include using ambient temperature to vaporize the groundwater, heating the groundwater, and/or using electrostatic spray injection. Measuring a concentration of at least one chemical in the vapor may include using absorption spectroscopy to measure absorption at known wavelengths to determine chemical concentration in the vapor.

The method may further include converting the measured concentration of at least one chemical in the vapor to concentration of the chemical in the groundwater. Henry's Law may be used to convert the measured concentration of at least one chemical in the vapor to the concentration of the chemical in the groundwater.

The system for in-situ groundwater monitoring includes a catch basin located above a groundwater formation; a pump that moves groundwater in the groundwater formation to the catch basin; an optical cavity located above the catch basin, wherein vapors from the groundwater in the catch basin interact with a light beam traveling through the optical cavity; and a sensor that detects a concentration of a chemical within the vapor.

The catch basin may include an inlet for receiving the groundwater from the pump and a drain for returning at least a portion of the groundwater back into the groundwater formation. The optical cavity may be a cavity ring down spectrometer cavity.

The light beam may be generated by a tunable laser. The tunable laser may have a spectral range designed to detect at least one chemical within the vapor.

The sensor may include a photodiode. The photodiode measures light pulse delay time as the light beam travels through the optical cavity. The sensor may be operable to convert the detected concentration of the chemical within the vapor to a concentration of the chemical in the groundwater.

The system may further include a heater that vaporizes the groundwater in the catch basin and/or a vapor container that guides the vapors from the catch basin to the optical cavity.

These as well as other aspects and advantages will become apparent to those of ordinary skill in the art by reading the following detailed description, with reference where appropriate to the accompanying drawings. Further, it is understood that this summary is merely an example and is not intended to limit the scope of the invention as claimed.

### BRIEF DESCRIPTION OF THE DRAWINGS

Presently preferred embodiments are described below in conjunction with the appended drawing figures, wherein like reference numerals refer to like elements in the various figures, and wherein:
Fig. 1 is a flow diagram of a method for groundwater monitoring, according to an example;
Fig. 2 is a block diagram of a system for groundwater monitoring, according to an example; and
Fig. 3 is a block diagram of a cavity ring down spectrometer (CRDS) cavity for use in the system depicted in Fig. 2, according to an example.

### DETAILED DESCRIPTION

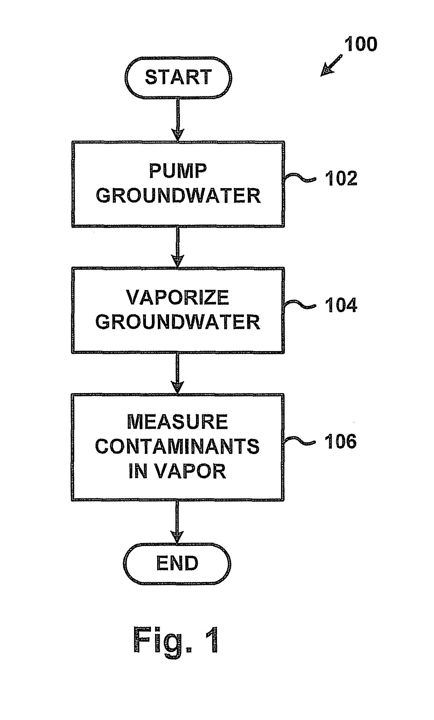

Fig. 1 is a flow diagram of a method 100 for groundwater monitoring. At block 102, groundwater is pumped to a stage located in a groundwater monitoring well. The stage may be located in the monitoring well such that it is above a groundwater formation (i.e., groundwater table), but below ground level. Alternatively, the stage may be located above ground level. The groundwater is the water in the groundwater formation and accessible via the groundwater monitoring well. The stage includes a groundwater retaining means, such as a catch basin or other type of container.

The groundwater is pumped to the stage using one of a variety of methods for pumping groundwater. The pumping method selected may be based on the depth of the groundwater below the ground surface. For example, a submersible pump may be used in a deep well application, while a pressure or vacuum pump may be used in shallow well applications. Alternatively, the groundwater may be moved to the stage using vertical transport via a container. At least a portion of the pumped groundwater is held in the groundwater retaining means of the stage.

At block 104, the pumped groundwater is vaporized at the stage. For example, the groundwater may be vaporized using the ambient environmental temperature. Additionally or alternatively, the groundwater may be vaporized by placing at least a portion of the pumped groundwater into a thin membrane on the stage and using a heater to vaporize the groundwater in the membrane. Other means for vaporizing the groundwater may also be used, including using other heating methods or groundwater vaporizing techniques, such as electrostatic spray injection (ESI).

The groundwater vapor rises above the stage. In one example, the vapor rises to the top of or above the groundwater monitoring well to a sensor located above ground at the top of the well. Alternatively, the sensor may be located within the well above the stage. A manifold may be used to direct the vapor from the stage to the sensor.

At block 106, contaminants in the vapor are measured. The sensor may be used to measure the contaminant levels (i.e., chemical concentration) in the vapor. For example, the sensor may use absorption spectroscopy to measure absorption at known wavelengths to determine contaminant levels in the vapor. Once the vapor contaminant levels are determined, these levels may be converted to groundwater contaminant levels. As a result, the groundwater contaminant levels may be determined on-site.

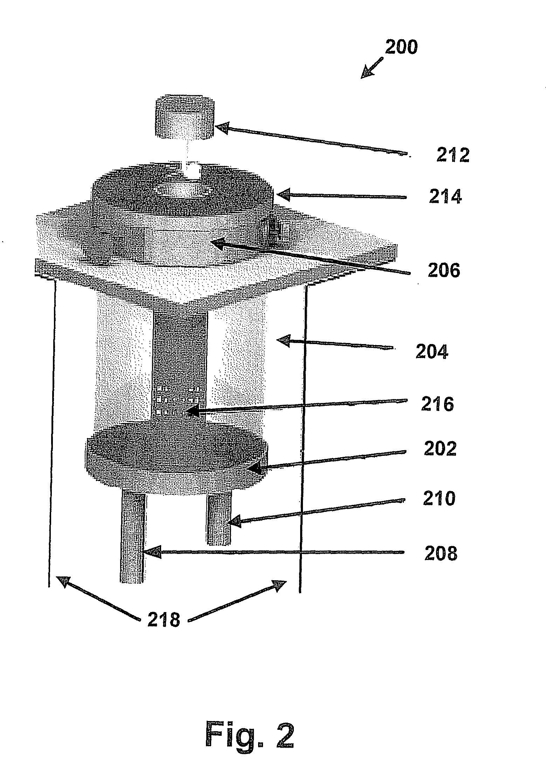

Fig. 2 is a block diagram of a system 200 for groundwater monitoring. The system 200 includes a catch basin 202, a vapor container 204, and an optical cavity 206. In this example, the catch basin 202 is located within a groundwater monitoring well 218 above the groundwater table, but below ground level. However, in other embodiments the catch basin 202 may be located above ground.

The vapor container 204 guides vapors from the catch basin 202 to the optical cavity 206. The optical cavity 206 is above the catch basin 202, within or above the monitoring well 218. Whether the optical cavity 206 is located within or above the monitoring well 218 may depend on the surface conditions. For example, if the monitoring well 218 is located in a parking lot, the optical cavity 206 may be located within the monitoring well 218 to prevent traffic from damaging the groundwater monitoring system 200.

The catch basin 202 may receive groundwater through an inlet 208. Excess groundwater drains out of the catch basin 202 and back to the groundwater formation via a drain 210. The drain 210 may include a check valve, which allows overflow groundwater to exit the catch basin 202, but prevents significant vapor leakage. As described with reference to Fig. 1, a pump may be used to pump the groundwater through the inlet 208 into the catch basin 202. A portion of the groundwater pumped into the catch basin 202 may be vaporized, while the remaining groundwater may exit the catch basin 202 via the drain 210 and return to the groundwater formation.

At least some of the groundwater that remains in the catch basin 202 is vaporized. The groundwater may be vaporized using the ambient environmental temperature. Particularly, in warmer regions and during warmer months in other regions, ambient temperatures may be sufficient to provide the heat needed to vaporize the groundwater in the catch basin 202. For example, a temperature of 30°C may be sufficient to vaporize the groundwater contaminants to levels that meet EPA detection requirements for many gas species.

Alternatively, the groundwater may be heated using a heater, such as a thin-film resistive heater mounted on a thin membrane. Heating the groundwater in the catch basin 202 may allow the system 200 to equilibrate faster and provide a greater vapor concentration of contaminants. The groundwater in the catch basin 202 may also be vaporized using electrostatic spray injection (ESI) of groundwater, which occurs by applying a voltage to micronozzles.

The vapor container 204 may be a cylindrical tube that guides the groundwater vapor from the catch basin 202 to the optical cavity 206. A wick manifold 216 may be located within the vapor container 204. The groundwater vapor may be generated when circulating vapor flows past the groundwater in the catch basin 202 and onto the wick manifold 216. Circulating the groundwater vapor may provide a uniform concentration of the vapor drawn from the wick manifold 216 throughout the optical cavity 206. The concentration of the chemicals of interest in the vapor phase is typically dependent on the temperature of the water-vapor interface.

The groundwater monitoring system 200 may also include a fan 212. The fan 212 may be located above the optical cavity 206 and may circulate the groundwater vapor to ensure a uniform vapor concentration throughout the system 200. Since there is a potential for evaporative cooling, the fan 212 may be deactivated for a period of time (i.e., a "settling time") before obtaining concentrations of chemicals in the vapor.

The groundwater monitoring system 200 may also include lid 214. The lid 214 may cover the optical cavity 206 to form a housing with a block of the optical cavity 206. The lid 214 may be composed of copper and include a heat conductor designed to absorb heat.

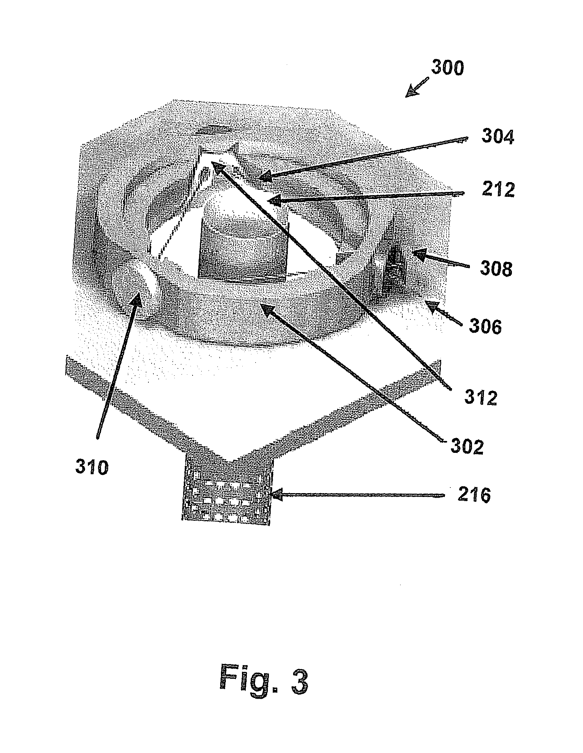

The optical cavity 206 may be a cavity ring down spectrometer (CRDS) cavity or other type of cavity, such as those used for ring laser gyroscopes. The vapor absorption at known infrared wavelengths contains unique "signature" information permitting identification of the gas, as well as a measurement of concentration of the gas. The CRDS cavity measures microsecond residence time (decay time) of the light captured in a resonant cavity. One example of an optical cavity 206 is further described with reference to Fig. 3.

Fig. 3 is a block diagram of a CRDS cavity 300. The CRDS cavity 300 may be used in the system 200 as the cavity 206. The CRDS cavity 300 includes a block 302 within which a light beam 304 travels. The path that the light beam 304 travels may be referred to as the bore absorption region. The light beam 304 that enters the block 302 is created using a light source 306. The light in the light beam 304 that leaves the block 302, referred to as the delay-time light, and is detected by a light detector 308. The light source 306 and/or the light detector 308 are preferably coupled to the CRDS cavity 300 via an optical fiber.

The block 302 may be composed of fused silica, BK7 optical glass, or any other suitable material that provides stability over a one hundred microsecond time period when the light beam 304 decays. As shown in Fig. 3, the block 302 is open allowing easier interaction between the groundwater vapor and the beam 304. Alternatively, openings may be cut along the length of the CRDS cavity 300 to permit the groundwater vapor to enter the bore absorption region.

The block 302 may include three or more mirrors 310. Preferably, the mirrors 310 have an optical coating that provides a mirror reflectivity in the range of 99.98% (or 20ppm). The mirrors 310 may be designed to operate in the short-wave infrared region (SWIR, i.e., 1.5-2.0µm range), where gas molecules have strong absorption. The mirrors 310 may be also designed to operate in the mid-wave infrared region (MWIR, i.e., 3-5µm range).

Typically, one or more of the mirrors 310 are curved so that the light beam 304 is refocused in each round trip through the CRDS cavity 300. Another mirror 310 is the input mirror where light is admitted into the CRDS cavity 300. The input mirror 310 may be piezoelectrically actuated to allow resonant coupling of the light beam 304 into the CRDS cavity 300. The input mirror 310 is also where the delay-time light exits the CRDS cavity 300 and is detected by the light detector 308.

Preferably, the mirrors 310 are protected from the vapor and dust by locating the mirrors 310 behind optical windows that are located at Brewster's angle, referred to herein as the Brewster window mirror protection 312. At the Brewster's angle, the windows 312 with low absorption do not significantly contribute to the loss in the CRDS cavity 300.

The groundwater contaminants enter the bore absorption region by vaporization of the groundwater in the catch basin 202 by ambient temperature, by heating, through ESI injection, or any other suitable means for vaporizing groundwater. For example, a liquid-vapor conversion system may be used. The liquid-vapor conversion system may include a diffusion membrane, similar to the pervaporation membrane used in desalinization.

The catch basin 202 may be in thermal contact with the block 302 and the cover 214. The cover 214 is heated to ambient temperature by the local environment. Due to the location of the CRDS cavity 300 and the catch basin 202 with respect to the cover 214, the CRDS cavity 300 is located closer to the ambient temperature heat source than the catch basin 202. Thus, the CRDS cavity 300 is likely to be warmer than the groundwater in the catch basin 202, which may prevent condensation of the contaminants to be analyzed.

The light source 306 may be a tunable laser, more specifically, a tunable infrared laser. The light source 306 may also be a quantum cascade laser or any other light source that can operate in the SWIR and/or MWIR range. Depending on the number and types of contaminants to be monitored, the light source 306 may include one or more lasers to cover the spectral range of interest. For example, a tunable laser with a spectral range between 1.64 and 1.685 may be used to detect TCE, DCE, TCA, chloroform, and benzene. As another example, a tunable laser with a spectral range between 1.62 and 1.65 may be used to detect methane.

When the laser wavelength is in resonance with the cavity mode, the light beam 304 resonantly couples into the block 302, preferably on a sub-microsecond time scale. Once captured, the light beam 304 transits the CRDS cavity 300 until the light decays via mirror and/or gas losses, typically in microseconds. Approximately one hundred microseconds later, the cavity mode is ready for another time decay measurement. Thus, one time decay measure may be obtained approximately every millisecond.

In typical operation, one hundred samples may be taken and averaged at each wavelength. The light source 306 may then be tuned to another wavelength and the process repeated until the full spectrum is obtained. Alternatively, for some contaminants, such as those with well-known signatures, obtaining a full spectrum may not be necessary. For example, the change in the time decay between an off-peak no-absorption wavelength and an on-peak gas absorption level may be measure instead.

The light detector 308 may include a photodiode, preferably, a photodiode capable of nanosecond response. The light detector 308 measures the light pulse decay time as the light beam 304 circulates around the CRDS cavity 300. The light pulse decay time is used to determine absorption of contaminants. The location and strength of the absorption lines uniquely identify the chemical and its concentration.

The light detector 308 may also include a processing device, such as a processor or a controller, operable to convert the measured concentration of the contaminant in the vapor to the concentration of the contaminant in the groundwater. The processing device may execute software to perform the vapor-groundwater conversion using known conversion techniques, such as Henry's Law. The conversion can be further augmented with a temperature argument.

The level of contamination as measured by the light detector 308 may be presented on a display. Additionally or alternatively, the measured level of contamination may be transmitted wirelessly to an onsite or offsite location where the results may be monitored at a distance away from the monitoring well 218. Further, this wireless link may be used to control the groundwater monitoring system 200.

The groundwater monitoring system 200 may be a portable instrument, which may be moved to different monitoring wells as site conditions change (e.g., as the contaminant plume expands or recedes), including moving the system 200 to a different site as needed. The groundwater monitoring system 200 may be used to detect contaminants typically found in groundwater now and those contaminants identified in the future. Moreover, the system 200 may detect contaminant levels consistent with the EPA MCL levels, which may change over time. Beneficially, the groundwater monitoring system 200 may provide results in approximately five minutes per sample. As a result, the groundwater monitoring system 200 may accelerate the identification of contamination levels with a significant reduction in the amount of laboratory testing, thus facilitating site assessment and reducing overall costs.

It should be understood that the illustrated embodiments are examples only and should not be taken as limiting the scope of the present invention. The claims should not be read as limited to the described order or elements unless stated to that effect. Therefore, all embodiments that come within the scope and spirit of the following claims and equivalents thereto are claimed as the invention.

## Claims

1. A method for in-situ groundwater monitoring, comprising:
moving groundwater to a container located above a groundwater table;
vaporizing at least a portion of the groundwater in the container; and
measuring a concentration of at least one chemical in the vapor.

2. The method of claim 1, wherein moving groundwater includes pumping the groundwater to the container.

3. The method of claim 1, wherein moving the groundwater includes using vertical transport of the groundwater to the container.

4. The method of claim 1, wherein vaporizing at least a portion of the groundwater includes using ambient temperature to vaporize the groundwater.

5. The method of claim 1, wherein vaporizing at least a portion of the groundwater includes heating the groundwater.

6. The method of claim 1, wherein vaporizing at least a portion of the groundwater includes using electrostatic spray injection.

7. The method of claim 1, wherein measuring a concentration of at least one chemical in the vapor includes using absorption spectroscopy to measure absorption at known wavelengths to determine chemical concentration in the vapor.

8. The method of claim 1, further comprising converting the measured concentration of at least one chemical in the vapor to concentration of the chemical in the groundwater.

9. The method of claim 8, wherein Henry's Law is used to convert the measured concentration of at least one chemical in the vapor to the concentration of the chemical in the groundwater.
